(19) Europäisches Patentamt
European Patent Office
Office européen des brevets

(11) EP 2 826 792 B1

(12) EUROPEAN PATENT SPECIFICATION

(45) Date of publication and mention of the grant of the patent:
**05.01.2022 Bulletin 2022/01**

(21) Application number: **13760974.9**

(22) Date of filing: **08.03.2013**

(51) Int Cl.:
***C08B 11/12*** *(2006.01)* ***C08B 15/04*** *(2006.01)*
***D01F 2/00*** *(2006.01)* ***D21H 11/18*** *(2006.01)*
***D21H 11/20*** *(2006.01)* ***D21H 19/34*** *(2006.01)*
***D21H 19/52*** *(2006.01)*

(86) International application number:
**PCT/JP2013/056459**

(87) International publication number:
**WO 2013/137140 (19.09.2013 Gazette 2013/38)**

# (54) METHOD FOR PRODUCING ANION-MODIFIED CELLULOSE NANOFIBER DISPERSION

VERFAHREN ZUR HERSTELLUNG EINER ANIONENMODIFIZIERTEN CELLULOSENANOFASERDISPERSION

PROCÉDÉ DE PRODUCTION D'UNE DISPERSION DE NANOFIBRES DE CELLULOSE MODIFIÉES PAR UN ANION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.03.2012 JP 2012057909**
**14.03.2012 JP 2012057910**

(43) Date of publication of application:
**21.01.2015 Bulletin 2015/04**

(73) Proprietor: **Nippon Paper Industries Co., Ltd.**
**Tokyo 114-0002 (JP)**

(72) Inventors:
- **TSUJI, Shiho**
  **Tokyo 114-0002 (JP)**
- **MIYAWAKI, Shoichi**
  **Tokyo 114-0002 (JP)**
- **FUKAZAWA, Masahiko**
  **Tokyo 114-0002 (JP)**
- **IIMORI, Takeshi**
  **Tokyo 114-0002 (JP)**
- **TAMURA, Naoyuki**
  **Tokyo 114-0002 (JP)**
- **NAKAYAMA, Takeshi**
  **Tokyo 114-0002 (JP)**

(74) Representative: **Carpmaels & Ransford LLP**
**One Southampton Row**
**London WC1B 5HA (GB)**

(56) References cited:
**WO-A1-02/060487**
**WO-A1-2010/116826**
**WO-A1-2011/111612**
**JP-A- S 568 402**
**JP-A- H0 841 101**
**JP-A- H05 125 224**
**JP-A- 2008 056 889**
**JP-A- 2010 235 679**
**JP-A- 2011 046 793**
**JP-A- 2011 207 939**
**JP-A- 2012 021 081**
**JP-A- 2012 214 717**
**US-A1- 2011 008 638**
**US-A1- 2012 000 392**
**US-B1- 6 602 994**

- **None**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 826 792 B1

## Description

### TECHNICAL FIELD

The present invention relates to a method for producing an anion-modified cellulose nanofiber dispersion.

### BACKGROUND ART

When a starting cellulosic material is treated in the presence of 2,2,6,6-tetramethyl-1-piperidin-N-oxyradical (hereinafter "TEMPO") and sodium hypochlorite which is an inexpensive oxidizing agent, carboxyl groups can be introduced efficiently onto the cellulose microfibril surface (Non-patent Document 1, Patent Documents 1 and 2). Further, carboxymethyl groups can be introduced into cellulose by mercerization of a starting cellulosic material and subsequent reaction with monochloroacetic acid or sodium monochloroacetate (Patent Documents 3 and 4). In the cellulose into which carboxyl groups (-COOH) or carboxymethyl groups (-CH2COOH) have been introduced, such groups are negatively charged in a solvent (hereinafter, the cellulose is referred to as "anion-modified cellulose"). It is known that when such anion-modified cellulose is treated in a solvent with a mixer or the like, a dispersion of cellulose nanofibers, which are cellulose microfibrils, is obtained (Non-patent Document 1, Patent Documents 1, 2 and 4).

Cellulose nanofibers are a water-dispersible and biodegradable material. Since cellulose nanofibers obtained by the method mentioned above are in the form of a dispersion, they can be blended with various water-soluble polymers or can form a composite with an organic or inorganic pigment and be modified consequently. Further, the cellulose nanofibers can be formed into a sheet or fiber. These characteristics of cellulose nanofibers are expected to be of help in developing novel and highly functional products by application of the cellulose nanofibers to highly functional packaging materials, transparent organic substrate materials, highly functional fibers, separation membranes, regenerative biomaterials and the like.

### CITATION LIST

#### PATENT DOCUMENTS

Patent Document 1: JP 2008-001728 A
Patent Document 2: JP 2010-235679 A
Patent Document 3: JP H10-251301 A
Patent Document 4: JP 2011-195738 A

#### NON-PATENT DOCUMENT

Non-patent Document 1: Saito, T., et al., Cellulose Commun., 14 (2), 62 (2007)

### SUMMARY

#### TECHNICAL PROBLEM

In consideration of application to the above-mentioned uses, it is preferred to produce a high concentration of cellulose nanofiber dispersion. However, there is the problem that a high concentration of such a dispersion has high viscosity, which makes the dispersion difficult to handle.

The present invention aims to provide a method for producing a cellulose nanofiber dispersion by which such a dispersion having superior fluidity can be produced.

#### SOLUTION TO PROBLEM

As a result of extensive and intensive studies, the present inventors found that addition of a certain amount of a monovalent or divalent metal ion to an anion-modified cellulose nanofiber dispersion can increase the fluidity of the dispersion. The monovalent or divalent metal ion may be added as defined in the claims, and it is preferred that the amount of the monovalent or divalent metal ion contained in a final dispersion is 0.5 to 10% (w/w) based on the amount of anion-modified cellulose. The monovalent or divalent metal ion is a metal ion contained in the liquid portion of the reaction mixture generated from the under-mentioned alkaline hydrolysis of anion-modified cellulose. More specifically,

the liquid obtained by solid-liquid separation of the reaction mixture generated from the alkaline hydrolysis of anion-modified cellulose may be added to a dispersion to incorporate a predetermined concentration of a monovalent or divalent metal ion into a final dispersion. Further, in the reaction mixture generated from the alkaline hydrolysis of anion-modified cellulose, the cellulose may be defibrated, without being washed, to form it into nanofibers to prepare an anion-modified cellulose nanofiber dispersion. By this process, the monovalent or divalent metal ion that remains in the reaction mixture generated from the alkaline hydrolysis is incorporated into the dispersion that, in consequence, has superior fluidity.

More specifically, the present invention provides the following methods [1] to [4]:

[1] A method for producing an anion-modified cellulose nanofiber dispersion, comprising the steps of:

(A) preparing anion-modified cellulose; and
(B) defibrating the anion-modified cellulose into nanofibers to prepare the anion-modified cellulose nanofiber dispersion,

the method further comprisingthe step of adding a compound containing a monovalent or divalent metal ion, wherein an amount of the added metal ion is 0.3 to 10% (w/w) based on anion-modified cellulose nanofibers contained in the final anion-modified cellulose nanofiber dispersion;
characterised in that the monovalent or divalent metal ion is a metal ion contained in a liquid portion of the reaction mixture generated from alkaline hydrolysis of a second anion-modified cellulose and wherein either:

(i) the second anion-modified cellulose is the anion-modified cellulose of step A and wherein the method comprises subjecting the reaction mixture from the alkaline hydrolysis to solid-liquid separation to recover the liquid portion, and adding the liquid portion to the cellulose nanofiber dispersion obtained from step B; or
(ii) the second anion-modified cellulose is not the anion-modified cellulose of step A and wherein the method comprises subjecting the reaction mixture from the alkaline hydrolysis to solid-liquid separation to recover the liquid-portion, and adding the liquid portion to the cellulose nanofiber dispersion obtained from step B without the alkaline hydrolysis treatment; or
(iii) the second anion-modified cellulose is the anion-modified cellulose of step A and wherein step B comprises defibrating the anion-modified cellulose contained in the reaction mixture from the alkaline hydrolysis into nanofibers, wherein the anion-modified cellulose obtained after completion of the alkaline hydrolysis is defibrated without being washed.

[2] The method according to [1], wherein the step of preparing anion-modified cellulose comprises introducing carboxymethyl groups into cellulose and a degree of substitution of carboxymethyl group per glucose unit of the anion-modified cellulose is 0.01 to 0.50.
[3] The method according to [1], wherein the step of preparing anion-modified cellulose comprises introducing carboxyl groups into cellulose and an amount of the introduced carboxyl groups is 1.0 to 2.0 mmol/g based on a bone dry mass of the anion-modified cellulose.
[4] The method according to any one of [1] to [3], wherein:

step A comprises oxidizing a starting cellulosic material with an oxidizing agent in the presence of an N-oxyl compound and a compound selected from the group consisting of bromides, iodides and mixtures thereof to introduce carboxyl groups into cellulose to prepare anion-modified cellulose; and
wherein the step of subjecting the anion-modified cellulose to alkaline hydrolysis uses an oxidizing agent or a reducing agent under alkaline conditions.

ADVANTAGEOUS EFFECTS OF INVENTION

In accordance with the present invention, a cellulose nanofiber dispersion having superior fluidity can be produced.

DESCRIPTION OF EMBODIMENTS

The present invention is described in detail below. As referred to herein, values of "A to B" mean values ranging from A to B, both ends inclusive.

1. Anion-modified cellulose nanofibers

The "anion-modified cellulose nanofibers" as referred to in the present invention mean cellulose microfibrils having an average fiber length of 50 to 5000 nm, preferably 0.1 to 5 μm and an average fiber width of 1 to 1000 nm or 2 to 300 nm, preferably 2 to 150 nm that are obtainable by defibration of a starting cellulosic material into which anionic groups (e.g., carboxyl groups or carboxymethyl groups) have been introduced ("anion-modified cellulose"). If the anion-modified cellulose is cellulose into which carboxyl groups have been introduced, cellulose nanofibers obtained are preferably single cellulose microfibrils having a width of about 2 to 5 nm and a length of about 1 to 5 μm or cellulose nanofibers having a width of about 2 to 300 nm and a length of about 100 to 500 nm.

< Starting cellulosic material >

The starting cellulosic material that is used encompasses, for example, kraft pulp or sulfite pulp of wood origin; cellulose powder formed by pulverizing such pulp with a highpressure homogenizer, a mill or the like; and a microcrystalline cellulose powder formed by purifying such a material by chemical treatment such as acid hydrolysis. Other starting cellulosic materials may be derived from plant such as kenaf, hemp, rice, bagasse or bamboo. It is preferred to use cellulose powder, microcrystalline cellulose powder, or chemical pulp such as kraft pulp or sulfite pulp, in terms of mass production and cost. Use of cellulose powder or microcrystalline cellulose powder provides cellulose nanofibers that form dispersion having low viscosity even in high concentration. When the chemical pulp is used, it is preferable to subject the pulp to a known bleaching treatment to remove lignin. The bleached pulp that can be used may be, for example, bleached kraft pulp or bleached sulfite pulp which has a brightness (ISO 2470) of 80% or more.

The "cellulose powder" means a rod-like particle consisting of microcrystalline or crystalline cellulose which is obtained by an acid hydrolysis to remove amorphous region from wood pulp, followed by pulverizing and sieving. In the cellulose powder, the degree of polymerization of cellulose is about 100 to 500, the crystallinity of the cellulose powder as measured by X-ray diffraction is 70 to 90%, and the volume average particle size as measured with an apparatus for laser diffraction particle size distribution is preferably 100 μm or less, more preferably 50 μm or less. When the volume average particle size is 100 μm or less, a cellulose nanofiber dispersion having more fluidity can be obtained. Such a cellulose powder may be prepared by subjecting well-selected pulp to acid hydrolysis to obtain an undecomposed residue and purifying, drying, pulverizing and sieving the residue, or may be a commercially available product such as KC FLOCK$^{R}$ (Nippon Paper Chemicals Co., Ltd.), CEOLUS$^{R}$ (Asahi Kasei Chemicals Corporation), or AVICEL$^{R}$ (FMC Corporation).

Further, a material prepared by making the starting cellulosic material fine with a dispersing apparatus such as a high-speed rotary apparatus, a colloid mill apparatus, a high pressure apparatus, a roll mill apparatus, or an ultrasound apparatus, a wet high pressure or ultrahigh pressure homogenizer, or the like also may be used as a starting cellulosic material.

< Anion-modified cellulose >

Anion-modified cellulose can be obtained by introducing anionic groups into the starting cellulosic material by the known methods exemplified below (anionic modification).

(1-1) Carboxymethylation

The starting cellulosic material is used as a starting material, and a solvent for this process is a mixed medium of water and a lower alcohol that is used with a mass 3 to 20 times the mass of the starting material. The lower alcohol includes methanol, ethanol, N-propyl alcohol, isopropyl alcohol, N-butanol, isobutanol, tertiary butanol or the like, or combinations thereof. The mixing proportion of the lower alcohol in the mixed medium is 60 to 95 mass %. An alkali metal hydroxide, more specifically, sodium hydroxide or potassium hydroxide, is used as a mercerizing agent in an amount of 0.5 to 20 moles per mole of glucose residue of the starting material. The starting material, the solvent, and the mercerizing agent are mixed and a mercerization treatment is carried out at a reaction temperature of 0 to 70°C, preferably 10 to 60°C, for a reaction time of 15 minutes to 8 hours, preferably 30 minutes to 7 hours. After that, monochloroacetic acid or sodium monochloroacetate (a carboxymethylating agent) is added in an amount of 0.05 to 10.0 moles per mole of glucose residue, and an etherification reaction is carried out at a reaction temperature of 30 to 90°C, preferably 40 to 80°C, for a reaction time of 30 minutes to 10 hours, preferably 1 to 4 hours, by which carboxymethyl group-introduced cellulose can be obtained.

If the carboxymethyl group-introduced cellulose is used as anion-modified cellulose, the degree of substitution of carboxymethyl group per glucose unit of the cellulose is preferably 0.01 to 0.50. Introduction of carboxymethyl groups into celluloses cause them to repel each other electrically. Thus, carboxymethyl group-introduced cellulose can be

defibrated easily into fibers that are on the order of nanometers. When the degree of substitution of carboxymethyl groupper glucose unit is less than 0.01, the cellulose cannot be defibrated sufficiently. In contrast, when the degree of substitution of carboxymethyl group per glucose unit is more than 0.50, the cellulose is swollen or dissolved during defibration and nanofibers may not be obtained.

The degree of substitution of carboxymethyl group can be determined by the following method:
About 2.0 g of a sample is weighed precisely and put into a 300 ml stoppered Erlenmeyer flask. 100 ml of nitric acid-methanol (a solution of 100 ml special grade concentrated nitric acid in 1 L anhydrous methanol) is added and the mixture is shaken for 3 hours to convert sodium carboxymethylcellulose (Na-CMC) into carboxymethylcellulose (H-CMC). 1.5 to 2.0 g of bone-dry H-CMC is weighed precisely and put into a 300 ml stoppered Erlenmeyer flask. The H-CMC is wetted with 15 ml of 80% methanol, 100 ml of 0.1N NaOH is added, and the mixture is shaken at room temperature for 3 hours. An excess of NaOH is back-titrated with 0.1N $H_2SO_4$ using phenolphthalein as an indicator. The degree of substitution of carboxymethyl group is calculated using the following formulas:

$$[\{100 \times F' - (0.1N\ H_2SO_4\ (ml)) \times F\} / (\text{bone dry mass (g) of H-CMC})] \times 0.1 = A$$

$$\text{Degree of substitution of carboxymethyl group} = 0.162A / (1 - 0.058A)$$

A: Amount (ml) of IN NaOH required for neutralization of 1 g of H-CMC
F': Factor for 0.1N $H_2SO_4$
F: Factor for 0.1 N NaOH

(1-2) Carboxylation

Carboxyl group-introduced cellulose (hereinafter also referred to as "oxidized cellulose") can be obtained by oxidation of the starting cellulosic material in water using an oxidizing agent in the presence of an N-oxyl compound and a compound selected from the group consisting of bromides, iodides and mixtures thereof.

The "N-oxyl compound" means a compound that can generate a nitroxyl radical. The N-oxyl compound may be any compound as long as it promotes desired oxidation reaction. Examples include compounds represented by the following general formula (Formula 1):

[Formula 1]

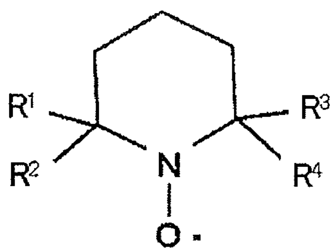

Formula 1

wherein $R^1$ to $R^4$, which are the same or different, each represent an alkyl group having about 1 to 4 carbon atoms.

Among the substances represented by Formula 1, 2,2,6,6-tetramethyl-1-piperidinoxyradical (hereinafter "TEMPO") is preferred. Further, N-oxyl compounds represented by any one of Formulas 2 to 5 below, i.e., 4-hydroxy TEMPO derivatives to which appropriate hydrophobicity has been imparted by etherification of the hydroxyl group of 4-hydroxy TEMPO with an alcohol or esterification with carboxylic acid or sulfonic acid, or 4-acetamide TEMPO to which appropriate hydrophobicity has been imparted by acetylation of the amino group of 4-amino TEMPO, are preferred since they are inexpensive and enable homogeneous oxidized cellulose to be obtained.

[Formula 2]

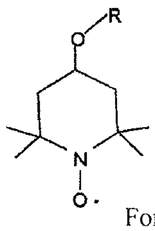
Formula 2

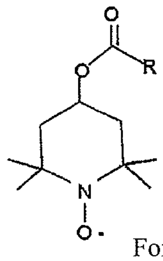
Formula 3

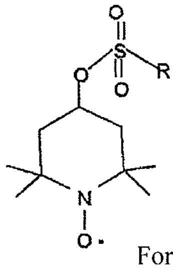
Formula 4

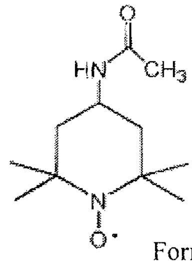
Formula 5

In Formulas 2 to 4, R is a straight or branched carbon chain having 4 or less carbon atoms.

Further, N-oxyl compounds represented by Formula 6 shown below, i.e., azaadamantane type nitroxyl radicals, are preferred since they can oxidize a starting cellulosic material efficiently within a short reaction time and tend not to cause cellulose chains to be broken.

[Formula 3]

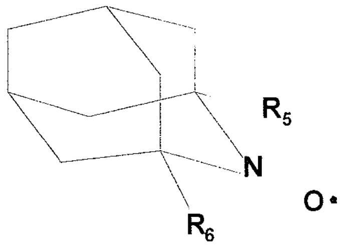
Formula 6

wherein $R_5$ and $R_6$, which are the same or different, each represent a hydrogen atom or a $C_1$-$C_6$ straight or branched alkyl group.

The amount of an N-oxyl compound used is not particularly limited as long as it is a catalytic amount that enables defibration of cellulose into nanofibers. For example, the amount is preferably 0.01 to 10 mmol, more preferably 0.01 to 1 mmol, even more preferably 0.05 to 0.5 mmol, based on 1 g (bone dry weight) of a starting cellulosic material.

The "bromide" means a bromine-containing compound and examples include alkali metal bromides which can be dissociated in water and ionized. The "iodide" means an iodine-containing compound and examples include alkali metal iodides. The amount of the bromide or iodide used may be selected within a range of amount that can promote oxidation reaction. For example, the total amount of the bromide or the iodide is preferably 0.1 to 100 mmol, more preferably 0.1 to 10 mmol, even more preferably 0.5 to 5 mmol, based on 1 g (bone dry weight) of a starting cellulosic material.

The oxidizing agent may be a known oxidizing agent, for example, a halogen, a hypohalogenous acid, a halogenous acid, a perhalogenic acid, or a salt thereof, a halogen oxide, or a peroxide. Among them, sodium hypochlorite, which is inexpensive and less harmful to the environment, is preferred. The appropriate amount of an oxidizing agent used is, for example, preferably 0.5 to 500 mmol, more preferably 0.5 to 50 mmol, even more preferably 1 to 25 mmol, most preferably 3 to 10 mmol, based on 1 g (bone dry weight) of a starting cellulosic material.

In the step of cellulose oxidation, it is possible to proceed with reaction efficiently even under relatively mild conditions. Hence, the reaction temperature may be a room temperature of about 15 to 30°C. As the reaction proceeds, carboxyl groups are generated in cellulose and hence, a decline in the pH of reaction mixture is observed. To proceed with the oxidation reaction efficiently, it is preferable to maintain the pH of reaction mixture at about pH 9 to 12, preferably about pH 10 to 11, by adding an alkaline solution such as an aqueous sodium hydroxide solution. The reaction medium is preferably water in terms of handleability, less tendency to cause a side reaction, and the like.

The reaction time in the oxidation reaction may be set as appropriate according to the degree of progression of oxidation and is generally about 0.5 to 6 hours, for example, about 0.5 to 4 hours.

The oxidation reaction may be carried out in two stages. For example, oxidized cellulose that is obtained by separation through filtration after completion of reaction in the first stage is oxidized again under the same or different reaction conditions, and this oxidation enables efficient introduction of carboxyl groups into a starting cellulosic material without reaction inhibition due to sodium chloride produced as a by-product of the reaction in the first stage.

It is preferable to set conditions such that the amount of carboxyl groups contained in the oxidized cellulose is 0.2 to 2.0 mmol/g or more based on the bone dry mass of the cellulose. The amount is more preferably 1.0 to 2.0 mmol/g.

The amount of the carboxyl groups can be adjusted by a means such as adjustment of the oxidation reaction time, the oxidation reaction temperature, the pH during the oxidation reaction, or the additive amount of the N-oxyl compound, bromide, iodide, or oxidizing agent.

The obtained oxidized cellulose is preferably washed.

The amount of the carboxyl groups can be calculated through the following steps: preparing 60 ml of 0.5 mass % slurry (aqueous dispersion) of the oxidized cellulose or cellulose nanofibers, adjusting the slurry to pH 2.5 with a 0.1M aqueous hydrochloric acid solution, then adding a 0.05N aqueous sodium hydroxide solution dropwise while measuring the electrical conductivity until the pH reaches 11, and calculating the amount of carboxyl groups on the basis of the amount of sodium hydroxide (a) consumed in the stage of neutralization with weak acid where the electrical conductivity changes slowly, using the following formula:

$$\text{Amount of carboxyl groups [mmol / oxidized cellulose or cellulose nanofibers [g]]} = \text{a [ml]} \times 0.05 / \text{mass [g] of oxidized cellulose or cellulose nanofibers}$$

< Defibration of anion-modified cellulose into nanofibers >

A dispersion containing the anion-modified cellulose that is obtained as described above is prepared and the cellulose is defibrated in the dispersion to form nanofibers. "To defibrate into nanofibers" means processing the cellulose into cellulose fibers that have an average fiber width of 1 to 1000 nm or 2 to 300 nm, preferably 2 to 150 nm, and an average fiber length of 50 to 5000 nm, preferably 0.1 to 5 μm. If the anion-modified cellulose is cellulose into which carboxyl groups have been introduced, cellulose fibers obtained preferably have a width of about 2 to 5 nm and a length of about 1 to 5 μm, or a width of about 2 to 300 nm and a length of about 100 to 500 nm. In the "dispersion," the anion-modified cellulose is dispersed in a dispersion medium. The dispersion medium is preferably water in terms of handleability.

To defibrate the anion-modified cellulose and disperse it in a dispersion medium, it is preferable to apply strong shear force to the dispersion with an apparatus such as a high-speed rotary apparatus, a colloid mill apparatus, a high pressure apparatus, a roll mill apparatus, or an ultrasound apparatus. To obtain anion-modified cellulose nanofibers efficiently, it is particularly preferable to use a wet high pressure or ultrahigh pressure homogenizer that can apply to the dispersion a pressure of 50 MPa or higher and strong shear force. The above-mentioned pressure is more preferably 100 MPa or higher, even more preferably 140 MPa or higher. By this treatment, anion-modified cellulose is defibrated and anion-modified cellulose nanofibers are formed and dispersed in a dispersion medium.

The concentration of anion-modified cellulose in a dispersion subjected to the above-mentioned treatment is 0.1% (w/v) or higher, preferably 1 to 50% (w/v), more preferably 1 to 10% (w/v), or may be 2 to 10% (w/v) or 3 to 10% (w/v).

2. Compound containing monovalent or divalent metal ion

The present invention increases the fluidity of anion-modified cellulose nanofiber dispersion by addition of a monovalent or divalent metal ion to the dispersion. The monovalent or divalent metal ion is added as defined in the claims. For example, the ion may be added after production of anion-modified cellulose, or after defibration of anion-modified cellulose into nanofibers to prepare an anion-modified cellulose nanofiber dispersion. In terms of fluidity increase, the amount of the added monovalent or divalent metal ion in a final anion-modified cellulose nanofiber dispersion is 0.3 to 10% (w/w) based on the amount of anion-modified cellulose (including anion-modified cellulose nanofibers). The amount of the added metal ion is more preferably 0.4 to 10% (w/w), even more preferably 0.5 to 8% (w/w). Even if increasing the amount of the added metal ion to more than 10% (w/w), there is no further increase in viscosity-reducing effect. In contrast, when the amount is lower than 0.3% (w/w), sufficient effect cannot be obtained. As referred to herein, the "amount of added metal ion" does not take into consideration a metal ion combined with anion-modified cellulose (for example, Na ion carried with carboxyl group (-COONa) in carboxyl group-introduced cellulose). The expression "an amount of added metal ion in a final anion-modified cellulose nanofiber dispersion" is intended to mean that a metal ion that is not included in a final dispersion is not taken into consideration; for example, even if a certain amount of metal ion is added during production of anion-modified cellulose nanofiber dispersion, a part of the added metal ion that is removed from the dispersion by washing or the like and is not included in the final dispersion, is not taken into consideration.

When a known concentration of a metal ion is added in the production process, the amount of the added metal ion in an anion-modified cellulose nanofiber dispersion can be calculated. Further, the amount of the added metal ion in a final dispersion can be determined by a known method for measuring the concentration of metal ion observed at each stage of production. To measure the concentration of metal ion, for example, a commercially available ion concentration meter (e.g., IM-32P, a portable ion meter produced by DKK-TOA Corporation) may be used.

Examples of the monovalent or divalent metal ion include ions such as sodium ion, magnesium ion, potassium ion, and calcium ion. Sodium ion or potassium ion is preferred. The monovalent or divalent metal ion may be added in the form of any inorganic salt or organic salt. Examples of such a compound containing a monovalent or divalent metal ion include the following salts of the metal ions: chloride, bromide, iodide, hydroxide, nitrate, nitrite, dihydrogenphosphate, sulfate, sulfite, thiosulfate, carbonate, phosphate, acetate, pyrophosphate, polyphosphate, tripolyphosphate, tetrapolyphosphate, metaphosphate, trimetaphosphate, tetrametaphosphate, hexametaphosphate, polyacrylate, polymethacrylate, polyitaconate, orthosilicate, metasilicate, phosphonate, polymaleic acid copolymer salt, humate, tannate, dodecylsulfate, dodecylbenzene sulfonate, polystyrene sulfonate, and lignin sulfonate; and polyesters having sulfonic acid group(s) and/or salts thereof. In the case of the organic acid salts, the organic acid is not limited to a homopolymer but may be a copolymer. For example, the organic acid may be a copolymer of polyacrylic acid or polymethacrylic acid with another monomer. Examples of the monomer for the copolymerization include unsaturated carboxylic acids such as α-hydroxyacrylic acid, crotonic acid, maleic acid, itaconic acid and fumaric acid, and unsaturated sulfonic acids such as 2-acrylamide-2-methylpropanesulfonic acid, (meth)arylsulfonic acid, and styrenesulfonic acid. The compound containing a monovalent or divalent metal ion may be a mixture of the above components.

Alternatively, a waste liquor obtained from the reaction mixture generated from the under-mentioned alkaline hydrolysis of anion-modified cellulose may be used as the compound containing a monovalent or divalent metal ion.

While not wishing to be bound by any particular theory, the present inventors infer the reason for advantageous effects to be exhibited in the present invention as follows: the anionic groups localized on the surface of anion-modified cellulose nanofibers form a hydrated layer around the cellulose nanofibers, and the cellulose nanofibers are present close to each other to form a network; when a certain amount of a compound containing a monovalent or divalent metal ion is contained in the anion-modified cellulose nanofibers, the cellulose nanofibers partially bind to each other and, as a result, the number of particles contained in a dispersion decreases and the viscosity of the dispersion is reduced.

3. Alkaline hydrolysis

When carboxyl group-introduced cellulose is used as anion-modified cellulose, hydrolysis may be carried out arbitrarily under alkaline conditions ("alkaline hydrolysis") before production of nanofibers. The alkaline hydrolysis may be carried out using water as a reaction medium. Further, an oxidizing agent or a reducing agent is used as an auxiliary agent. The oxidizing agent or reducing agent may be one that has activity in an alkaline range. The oxidizing agent includes oxygen, ozone, hydrogen peroxide and hypochlorite, or combinations thereof. The reducing agent includes sodium boron hydride, hydrosulfite and sulfite, or combinations thereof. In terms of reaction efficiency, the additive amount of the auxiliary agent is preferably 0.1 to 10 mass %, more preferably 0.3 to 5 mass %, even more preferably 0.5 to 2 mass %, based on bone-dry anion-modified cellulose.

The pH of the system in the alkaline hydrolysis reaction is preferably 8 to 14, more preferably 9 to 13, even more preferably 10 to 12. The alkali that is used may be any water-soluble alkali, but sodium hydroxide is best in terms of production cost. The temperature is preferably 40 to 120°C, more preferably 50 to 100°C, even more preferably 60 to 90°C. The reaction time is preferably 0.5 to 24 hours, more preferably 1 to 10 hours, even more preferably 2 to 6 hours. The concentration of anion-modified cellulose in the system is preferably 1 to 20 mass %, more preferably 3 to 15 mass %, even more preferably 5 to 10 mass %.

The alkaline hydrolysis can reduce the energy required for defibration of anion-modified cellulose into nanofibers. The reason for this reduction is not clear but is inferred as follows:
Carboxyl groups are located in the amorphous region of cellulose oxidized with an N-oxyl compound, and the hydrogen at the C6-position at which a carboxyl group exists lacks electric charge since the electron of the hydrogen atom has been attracted by the carboxyl group; hence, under alkaline conditions, the hydrogen is easily removed by a hydroxide ion and, as a result, cleavage reaction of glycoside bonds due to β-elimination proceeds and fiber length of the oxidized cellulose becomes shorter. By allowing the fiber length of oxidized cellulose fibers to be shortened in this way, the viscosity of a dispersion containing the starting material can be lowered. In consequence, the energy required for the subsequent step of production of nanofibers is reduced. It should be noted that when the cellulose is merely hydrolyzed under alkaline conditions, the cellulose is likely to take on a yellow color. It is presumed that this is due to generation of double bonds during β-elimination. If an oxidizing agent or a reducing agent is used in the hydrolysis under alkaline conditions, the double bonds can be oxidized or reduced to be removed, and hence, coloration is suppressed.

< Use of waste liquor obtained from alkaline hydrolysis reaction >

(3-1) Addition of waste liquor obtained from alkaline hydrolysis reaction

The present invention increases the fluidity of dispersion by addition of a compound containing a monovalent or divalent metal ion to the dispersion, and such a compound may be waste liquor obtained from the above-mentioned

alkaline hydrolysis reaction. In this case, the reaction mixture obtained after completion of the alkaline hydrolysis reaction is subjected to solid-liquid separation and the liquid obtained is used as the "waste liquor". Examples of a solid-liquid separator that is used include, but are not particularly limited to, vertical or horizontal centrifugal solid-liquid separation and dewatering apparatuses such as a decanter type centrifuge separator; filter-type solid-liquid separation and dewatering apparatuses such as a vacuum filter, a pressure filter, and a drum displacer; and press-type solid-liquid separation and dewatering apparatuses such as a filter press, a belt press, a screw press, a twin roll press, and a wash press.

The waste liquor obtained from the alkaline hydrolysis reaction may be added to a cellulose nanofiber dispersion obtained by defibration of anion-modified cellulose with the alkaline hydrolysis treatment, or to a cellulose nanofiber dispersion obtained by defibration of anion-modified cellulose without the alkaline hydrolysis treatment. The additive amount of the waste liquor may be determined according to the concentration of the monovalent or divalent metal ion contained in the waste liquor.

(3-2) Defibration of unwashed cellulose after alkaline hydrolysis reaction

One of methods for use of the waste liquor obtained from the alkaline hydrolysis may be a method in which cellulose obtained after completion of the alkaline hydrolysis reaction is defibrated without being washed, which allows a cellulose nanofiber dispersion to contain the monovalent or divalent metal ion contained in the reaction mixture generated from the alkaline hydrolysis. Alkaline hydrolysis of anion-modified cellulose (carboxyl group-introduced cellulose) and subsequent defibration of the unwashed cellulose, as described above, allow a cellulose nanofiber dispersion to contain the monovalent or divalent metal ion that remains in the reaction mixture generated from the alkaline hydrolysis.

The cellulose nanofibers obtained by alkaline hydrolysis of carboxyl group-introduced cellulose and defibration of the unwashed cellulose are single cellulose microfibrils having a width of about 2 to 300 nm and a length of about 100 to 500 nm, or a width of about 2 to 5 nm and a length of about 1 to 5 $\mu$m. As to the cellulose nanofibers, the B-type viscosity (60 rpm, 20°C) in an aqueous dispersion having a concentration of 5.0% (w/v) is 3000 mPa•s or less, preferably 2000 mPa•s or less, more preferably 1000 mPa•s or less. When the B-type viscosity in an aqueous dispersion having a concentration of 5% (w/v) is 3000 mPa•s or less, superior miscibility with various pigments, binder resins and the like is obtained. Further, when the B-type viscosity is 1000 Pa•s or less, a coating layer having at least a certain film thickness and superior surface nature can be obtained efficiently. The lower limit of the B-type viscosity is not particularly limited but is generally at least about 1 mPa•s or at least about 5 mPa•s. The B-type viscosity may be measured with a common B-type viscometer, and for example, TV-10 viscometer, which is a product of Toki Sangyo Co., Ltd., may be used to measure the B-type viscosity under the conditions of 20°C and 60 rpm. Since the cellulose nanofibers are superior in fluidity as well as barrier property and heat resistance, they can be used for various applications such as packaging materials.

4. Viscosity-reducing treatment

When carboxyl group-introduced cellulose is used as anion-modified cellulose, a method different from the above-mentioned alkaline hydrolysis may be used arbitrarily to subject the cellulose to a viscosity-reducing treatment before defibration of the cellulose into nanofibers. This treatment can reduce the energy required for the production of nanofibers. The "viscosity-reducing treatment" means a treatment of cutting anion-modified cellulose chains into pieces of appropriate length (production of the cellulose chains into short fibers). Given that dispersion prepared using the thus treated starting material has low viscosity, the viscosity-reducing treatment can also be regarded as a treatment for obtaining anion-modified cellulose that forms low-viscosity dispersion. The viscosity-reducing treatment may be a treatment that reduces the viscosity of anion-modified cellulose, and it is, for example, a treatment of irradiating anion-modified cellulose with ultraviolet rays, a treatment of oxidizing and decomposing anion-modified cellulose using hydrogen peroxide and ozone, a treatment of hydrolyzing anion-modified cellulose with an acid, or a combination of these treatments. Such a viscosity-reducing treatment may be carried out before alkaline hydrolysis or between alkaline hydrolysis and production of nanofibers. Alternatively, before production of nanofibers, only the viscosity-reducing treatment may be carried out without alkaline hydrolysis.

(4-1) Ultraviolet irradiation

When a viscosity-reducing treatment is carried out by irradiation of anion-modified cellulose with ultraviolet rays, the wavelength of the ultraviolet rays is preferably 100 to 400 nm, more preferably 100 to 300 nm. Especially, ultraviolet rays of wavelength 135 to 260 nm are preferred since they can act directly on cellulose or hemicellulose to reduce its molecular weight and form anion-modified cellulose into short fibers.

As a light source for the ultraviolet irradiation, one that can irradiate light in a wavelength range of 100 to 400 nm may be used. Specific examples include a xenon short arc lamp, an ultrahigh pressure mercury lamp, a high pressure

mercury lamp, a low pressure mercury lamp, a deuterium lamp, and a metal halide lamp. These light sources may be used singly or in combination of any two or more. In particular, when a combination of a plurality of light sources having different wavelength characteristics is used, ultraviolet rays of different wavelengths can be irradiated simultaneously, thereby increasing dissociation sites of cellulose chains or hemicellulose chains; hence, production of short fibers can be promoted.

As a vessel in which anion-modified cellulose is placed, for example, a vessel made of hard glass may be used when ultraviolet rays of a wavelength longer than 300 nm are used. On the other hand, when ultraviolet rays of a wavelength shorter than 300 nm are used, it is preferable to use a vessel made of quartz glass which transmits more ultraviolet rays. In the vessel, a material of the part that is not involved in the reaction with ultraviolet rays may be selected as appropriate from materials less likely to be deteriorated for the wavelength of ultraviolet rays.

To proceed with the reaction efficiently, it is preferable to prepare a dispersion by dispersing anion-modified cellulose in a dispersion medium and irradiate the dispersion with ultraviolet rays. The dispersion medium is preferably water, from the viewpoints of suppression of any side reaction and the like. The concentration of anion-modified cellulose in the dispersion is preferably 0.1 mass % or higher, from the viewpoint of enhancement of energy efficiency. Further, the concentration is preferably 12 mass % or lower to maintain good fluidity of anion-modified cellulose in an ultraviolet irradiator and enhance reaction efficiency. Hence, the concentration of anion-modified cellulose in the dispersion is preferably 0.1 to 12 mass %, more preferably 0.5 to 5 mass %, even more preferably 1 to 3 mass %.

The reaction temperature is preferably 20°C or higher in terms of reaction efficiency. Meanwhile, when the temperature is too high, anion-modified cellulose can be deteriorated or the pressure in a reactor apparatus can exceed atmospheric pressure; hence, the reaction temperature is preferably 95°C or lower. Accordingly, the reaction temperature is preferably 20 to 95°C, more preferably 20 to 80°C, even more preferably 20 to 50°C. Further, when the reaction temperature falls within the range, there is the advantage that it is unnecessary to take pressure resistance into consideration in apparatus designing. The pH of the system in the reaction is not limited, but the neutral range, for example, about pH 6.0 to 8.0, is preferred in light of simplification of process.

The level of the ultraviolet irradiation may be set arbitrarily by a means such as adjusting the residence time of anion-modified cellulose in an irradiation reactor or adjusting the amount of energy of an irradiation light source. For example, the amount of ultraviolet rays with which anion-modified cellulose is irradiated may be adjusted by diluting with water or the like the dispersion of anion-modified cellulose in an irradiation apparatus or diluting the dispersion by blowing air or an inert gas such as nitrogen into the dispersion. These conditions are selected as appropriate to obtain desired values of quality of the treated starting material (e.g., fiber length, polymerization degree of cellulose).

It is preferable to perform the ultraviolet irradiation in the presence of an auxiliary agent such as oxygen, ozone or a peroxide (e.g., hydrogen peroxide, peracetic acid, sodium percarbonate, sodium perborate), since the efficiency of the photo-oxidation reaction can be enhanced. Especially, in the case of irradiation with ultraviolet rays in a wavelength range of 135 to 242 nm, it is preferred that the ozone generated from air which is present generally in a vapor phase area near a light source is used as an auxiliary agent. For example, while air is continuously supplied to an area near a light source, ozone generated is continuously withdrawn and injected into anion-modified cellulose; in consequence, ozone can be utilized as an auxiliary agent in the photo-oxidation reaction without supplying ozone from the outside of the system. Moreover, by supplying oxygen to the vapor phase area near a light source, more ozone can be generated in the system. In this manner, ozone generated secondarily in an ultraviolet irradiation reactor can be utilized.

The ultraviolet irradiation may be repeated plural times. The number of the repetitions may be set as appropriate according to the quality of the treated starting material, the relation with post-treatment such as bleaching, and the like. For example, ultraviolet rays of 100 to 400 nm, preferably 135 to 260 nm, may be irradiated about 1 to 10 times, preferably about 2 to 5 times. In this case, the irradiation time is preferably 0.5 to 10 hours each time, more preferably 0.5 to 3 hours each time.

(4-2) Oxidative decomposition using hydrogen peroxide and ozone

Ozone may be generated in an ozone generator by a known method using air or oxygen as a starting material. As described above, to perform an oxidation reaction efficiently, it is preferred to use a dispersion prepared by dispersing anion-modified cellulose in a dispersion medium such as water. The amount (mass) of ozone that is used is preferably 0.1 to 3 times larger than the bone dry mass of anion-modified cellulose. When the amount of ozone is at least 0.1 time larger than the bone dry mass of anion-modified cellulose, the amorphous region of the cellulose can be decomposed sufficiently, which enables reduction in the energy required for the subsequent step of production of nanofibers. Meanwhile, when the amount of ozone is excessively large, cellulose can be decomposed excessively, but when the amount of use is not more than 3 times larger than the bone dry mass of anion-modified cellulose, excessive decomposition can be suppressed. The amount of ozone is more preferably 0.3 to 2.5 times, even more preferably 0.5 to 1.5 times larger than the bone dry mass of anion-modified cellulose.

The amount (mass) of hydrogen peroxide that is used is preferably 0.001 to 1.5 times larger than the bone dry

mass of anion-modified cellulose. When hydrogen peroxide is used in an amount that is at least 0.001 time larger than the bone dry mass of anion-modified cellulose, synergistic action of ozone and hydrogen peroxide is exerted, making an efficient reaction possible. Meanwhile, for the decomposition of anion-modified cellulose, it is sufficient to use hydrogen peroxide in an amount that is not more than about 1.5 times larger than the bone dry mass of anion-modified cellulose, and use of hydrogen peroxide in a larger amount leads to cost increase. The amount of hydrogen peroxide is more preferably 0.1 to 1.0 time larger than the bone dry mass of anion-modified cellulose.

In terms of reaction efficiency, the pH of the system in the oxidative decomposition treatment with ozone and hydrogen peroxide is preferably 2 to 12, more preferably 4 to 10, even more preferably 6 to 8. The temperature is preferably 10 to 90°C, more preferably 20 to 70°C, even more preferably 30 to 50°C. The treatment time is preferably 1 to 20 hours, more preferably 2 to 10 hours, even more preferably 3 to 6 hours.

An apparatus for the treatment with ozone and hydrogen peroxide may be a common apparatus. Examples of the apparatus include a common reactor having a reaction chamber, a stirrer, a chemical injector, a heater, and a pH electrode.

After the treatment with ozone and hydrogen peroxide, residual ozone and hydrogen peroxide in the aqueous solution also act effectively in the step of production of nanofibers, thus allowing production of cellulose nanofibers that form lower viscosity dispersion.

The reason a viscosity-reducing treatment for anion-modified cellulose can be carried out using hydrogen peroxide and ozone is inferred as follows: between anion-modified celluloses, microscopic spaces formed by the action of charge repulsive force between anionic groups exist, whereas such spaces are not found in common pulp; when anion-modified cellulose is treated with ozone and hydrogen peroxide, hydroxyl radicals which have superior oxidizability are generated from the ozone and the hydrogen peroxide, infiltrate the microscopic spaces and oxidize and decompose chains in the cellulose efficiently, forming it into short fibers.

(4-3) Hydrolysis with acid

An acid is added to anion-modified cellulose to hydrolyze its cellulose chains ("acid hydrolysis"). The acid that is preferably used is a mineral acid such as sulfuric acid, hydrochloric acid, nitric acid or phosphoric acid. As described above, to perform the reaction efficiently, it is preferable to use a dispersion prepared by dispersing anion-modified cellulose in a dispersion medium such as water. The conditions for the acid hydrolysis may be ones that allow the acid to act on the amorphous region of the cellulose. For example, the additive amount of the acid is preferably 0.01 to 0.5 mass %, more preferably 0.1 to 0.5 mass %, based on the bone dry mass of anion-modified cellulose. Addition of the acid in an amount of 0.01 mass % or more is preferred since hydrolysis of cellulose proceeds and efficiency of production of nanofibers increases. When the additive amount is 0.5 mass % or less, it is possible to prevent excessive hydrolysis of cellulose and decrease in the yield of cellulose nanofibers. The pH of the system during the acid hydrolysis is preferably 2.0 to 4.0, more preferably at least 2.0 to below 3.0. It is to be noted that when alkali that is used in the alkaline hydrolysis reaction or the like remains in the dispersion medium for anion-modified cellulose, it is preferable to adjust the pH of the system to a pH falling within the range by increasing the additive amount of acid as appropriate. In terms of reaction efficiency, the reaction is preferably carried out at a temperature of 70 to 120°C for 1 to 10 hours.

To perform the step of production of nanofibers efficiently, it is preferable to perform neutralization with an alkali such as sodium hydroxide after the acid hydrolysis treatment.

The reason a viscosity-reducing treatment for anion-modified cellulose can be carried out by the acid hydrolysis is inferred as follows: as described above, the anionic groups localized on the surface of anion-modified cellulose form a hydrated layer around the cellulose, and the celluloses are present close to each other to form a network; when an acid is added to carry out hydrolysis, the charge balance in the network is lost, the robust network formed of cellulose molecules is broken up, the specific surface area of the anion-modified cellulose increases, the production of short fibers is promoted, and the viscosity of the cellulose is reduced.

## EXAMPLES

The present invention is described in more detail below by means of Examples, but the invention is not limited thereto.

[Example 1]

Step A: 500 g (bone dry weight) of unbeaten bleached softwood kraft pulp (brightness: 85%) was added to 500 ml of an aqueous solution in which 780 mg of TEMPO (Sigma Aldrich) and 75.5 g of sodium bromide were dissolved, and the mixture was stirred until the pulp was evenly dispersed. To the reaction system, an aqueous sodium hypochlorite solution was added in an amount of 6.5 mmol/g, and oxidation reaction was initiated. While the pH of the system

decreased during the reaction, a 3M aqueous sodium hydroxide solution was successively added to adjust the system to pH 10. When sodium hypochlorite was consumed and the pH of the system did not change any longer, the reaction was terminated. The mixture obtained from the reaction was passed through a glass filter to isolate pulp and the pulp was well washed with water to give oxidized pulp (carboxyl group-introduced pulp). The yield of the pulp was 86% and the time required for the oxidation reaction was 115 minutes.

Step B: The oxidized pulp was adjusted to 1.053% (w/v) and treated three times with an ultrahigh pressure homogenizer (20°C, 140 Mpa) to give an anion-modified cellulose nanofiber dispersion. A 3% (w/v) aqueous solution of a metal ion-containing compound (sodium glucuronate) was prepared, 5 ml of the aqueous solution was added to 95 ml of the cellulose nanofiber dispersion, and the mixture was stirred with homogenizer at 3000 rpm for 1 minute to give a homogeneous dispersion.

The B-type viscosity of the obtained dispersion was measured at 60 rpm at 20°C with TV-10 viscometer, which is a product of Toki Sangyo Co., Ltd.

Table 1 shows the measurement result of the B-type viscosity and the concentration (w/w %) of the monovalent or divalent metal ion based on the anion-modified cellulose contained in the dispersion.

[Example 2]

A dispersion was obtained in the same manner as in Example 1 except that sodium cellouronate was used as the metal ion-containing compound in the step B described above.

[Example 3]

A dispersion was obtained in the same manner as in Example 1 except that a sodium salt of carboxymethyl cellulose (A02SH, a product of Nippon Paper Chemicals Co., Ltd.) was used as the metal ion-containing compound in the step B described above.

[Example 4]

A dispersion was obtained in the same manner as in Example 1 except that sodium ethylenediaminetetraacetate was used as the metal ion-containing compound in the step B described above.

[Example 5]

A dispersion was obtained in the same manner as in Example 1 except that sodium phytate was used as the metal ion-containing compound in the step B described above.

[Example 6]

A dispersion was obtained in the same manner as in Example 1 except that sodium polyacrylate (SN-DISPERSANT L-400, a product of San Nopco Ltd.) was used as the metal ion-containing compound in the step B described above.

[Example 7]

A dispersion was obtained in the same manner as in Example 1 except that sodium polysulfonate (A-6012, a product of Kao Corporation) was used as the metal ion-containing compound in the step B described above.

[Example 8]

A dispersion was obtained in the same manner as in Example 1 except that sodium polystyrene sulfonate was used as the metal ion-containing compound in the step B described above.

[Example 9]

A dispersion was obtained in the same manner as in Example 1 except that a sodium salt of β-sulfated cyclodextrin was used as the metal ion-containing compound in the step B described above.

[Example 10]

A dispersion was obtained in the same manner as in Example 1 except that sodium chloride was used as the metal ion-containing compound in the step B described above.

[Example 11]

A dispersion was obtained in the same manner as in Example 1 except that a mixture of sodium polyacrylate and magnesium polyacrylate (POIZ$^R$, a product of Kao Corporation) was used as the metal ion-containing compound in the step B described above.

[Example 12]

A dispersion was obtained in the same manner as in Example 1 except that magnesium chloride was used as the metal ion-containing compound in the step B described above.

[Example 13]

A dispersion was obtained in the same manner as in Example 1 except that potassium chloride was used as the metal ion-containing compound in the step B described above.

[Example 14]

Into a stirrer that can stir pulp, 200 g of pulp (LBKP, a product of Nippon Paper Chemicals Co., Ltd.) and 88 g of sodium hydroxide, which are both on a dry mass basis, were added, and the mixture was adjusted with water to a pulp solid concentration of 15%. The mixture was thereafter stirred at 30°C for 30 minutes and then heated to 70°C, and sodium monochloroacetate was added in an amount of 117 g, based on active component. After 1-hour reaction, the reaction product was taken out, neutralized and washed to give anion-modified cellulose having a degree of substitution of carboxymethyl group of 0.05 per glucose unit (carboxymethyl group-introduced cellulose). The anion-modified cellulose was thereafter formed into nanofibers in accordance with the step B described in Example 1 to give an anion-modified cellulose nanofiber dispersion. A 3% (w/v) aqueous solution of a metal ion-containing compound (sodium chloride) was prepared, 5 ml of the aqueous solution was added to 95 ml of the cellulose nanofiber dispersion liquid, and the mixture was stirred with a homogenizer at 3000 rpm for 1 minute to give a homogeneous dispersion. Table 1 shows the measurement result of the B-type viscosity of the prepared dispersion at 60 rpm at 20°C.

Examples 1-14 are Reference Examples.

[Comparative Example 1]

From the oxidized pulp that was prepared in the step A of Example 1, a 1.053% (w/v) cellulose nanofiber dispersion was prepared in accordance with the step B of Example 1. A metal ion-free compound (ultrapure water) was added instead of the metal ion-containing compound described in the step B of Example 1, and the mixture was stirred with a homogenizer at 3000 rpm for 1 minute to give a homogeneous dispersion. Table 1 shows the measurement result of the B-type viscosity of the prepared dispersion at 60 rpm at 20°C.

[Comparative Example 2]

A dispersion was prepared in the same manner as in Comparative Example 1 except that polyvinyl alcohol was used instead of the ultrapure water used in Comparative Example 1.

[Comparative Example 3]

A dispersion was prepared in the same manner as in Example 14 except that ultrapure water was added instead of the metal ion-containing compound used in Example 14.

[Table 1]

| | Anion-modified cellulose | Added compound | Monovalent or divalent metal ion | B-type viscosity (mPa•s) | Conc. (%) of added metal ion (v.s. cellulose) |
|---|---|---|---|---|---|
| Ex. 1 | Carboxylated cellulose | Sodium glucuronate | Na | 4569 | 1.6 |
| Ex. 2 | Carboxylated cellulose | Sodium cellouronate | Na | 4020 | 1.7 |
| Ex. 3 | Carboxylated cellulose | Sodium salt of carboxymethyl cellulose | Na | 3654 | 1.4 |
| Ex. 4 | Carboxylated cellulose | Sodium ethylenediaminetetraacetate | Na | 3695 | 0.9 |
| Ex. 5 | Carboxylated cellulose | Sodium phytate | Na | 3667 | 0.4 |
| Ex. 6 | Carboxylated cellulose | Sodium polyacrylate | Na | 3279 | 3.7 |
| Ex. 7 | Carboxylated cellulose | Sodium polysulfonate | Na | 3459 | 1.7 |
| Ex. 8 | Carboxylated cellulose | Sodium polystyrene sulfonate | Na | 4329 | 1.9 |
| Ex. 9 | Carboxylated cellulose | Sodium salt of β-sulfated cyclodextrin | Na | 4068 | 1.2 |
| Ex. 10 | Carboxylated cellulose | Sodium chloride | Na | 2407 | 5.9 |
| Ex. 11 | Carboxylated cellulose | Mixture of sodium polyacrylate and magnesium polyacrylate | Na, Mg | 4570 | 3.8 |
| Ex. 12 | Carboxylated cellulose | Magnesium chloride | Mg | 6128 | 3.8 |
| Ex. 13 | Carboxylated cellulose | Potassium chloride | K | 3569 | 7.9 |
| Ex. 14 | Carboxymethylated cellulose | Sodium chloride | Na | 2959 | 5.9 |
| Comp. Ex. 1 | Carboxylated cellulose | (Ultrapure water) | — | 7068 | — |
| Comp. Ex. 2 | Carboxylated cellulose | Polyvinyl alcohol | — | 7728 | — |
| Comp. Ex. 3 | Carboxymethylated cellulose | (Ultrapure water) | — | 4999 | — |

[Example 15]

(Preparation of bleached LDKP)

Into a 2.4 L-volume rotary autoclave, 300 g (bone dry weight) of hardwood chip was put, and water was added to adjust the liquor ratio to 2 L/kg. The mixture was maintained at 170°C for 30 minutes to carry out hydrolysis treatment and then neutralized with a neutralizing solution at 155°C for 15 minutes. The neutralizing solution was prepared by mixing sodium hydroxide and sodium sulfide so that the solution had 11% active alkali (versus the mass of chip), 25% sulfidity and a liquor ratio of 2.5 L/kg. After the neutralization treatment, liquid was withdrawn from the autoclave, a

cooking liquor (which was prepared by mixing sodium hydroxide and sodium sulfide so that the cooking liquor had 9% active alkali (versus the mass of chip), 25% sulfidity and a liquor ratio of 2.5 L/kg) was added, and a cooking process was carried out at 160°C until the H-factor reached 830.

The cooked unbleached pulp was delignified with oxygen and then bleached in the sequence of DO-E/P-D 1 as ECF bleaching. The oxygen delignification was performed with Quantum high intensity mini mixer, and after the reaction, the pulp was well washed. The bleaching steps were all carried out in a water bath, using pulp slurry (pulp conc. 10%) contained in a plastic bag. After the bleaching, fresh water was used for dilution to a pulp concentration of 1.5% and water obtained by pressing was used for several-time washing. In the subsequent bleaching stage, the water obtained by pressing in the previous stage was used to adjust the pulp concentration to 15%, and then bleaching was carried out with a predetermined amount of a bleaching chemical to adjust the pulp concentration to 10%. It is to be noted that waste water obtained in the previous oxygen delignification stage was not introduced in only the DO stage. Oxygen delignification: pulp conc. 10%; additive amount of sodium hydroxide 4.0%; initial oxygen pressure 6.0 kg/cm$^2$; reaction temperature 98°C; reaction time 60 min. D0: pulp conc. 10%; additive amount of chlorine dioxide 10 kg/ADTP; reaction temperature 55°C; reaction time 40 min. E/P: pulp conc. 10%; additive amount of sodium hydroxide 7.0 kg/ADTP; additive amount of hydrogen peroxide 2.7 g/ADTP; reaction temperature 65°C; reaction time 90 min. D1: pulp conc. 10%; additive amount of chlorine dioxide 1.5 kg/ADTP; reaction temperature 65°C; reaction time 180 min. By the bleaching treatment described above, unbeaten bleached pulp (bleached LDKP; brightness: 86%) was obtained.

(Anionic modification of LDKP)

100 g (bone dry weight) of LDKP obtained by repeating the procedure described above was added to 10 L of an aqueous solution in which 1.56 g of TEMPO (Sigma Aldrich) and 15.1 g of sodium bromide were dissolved, and the mixture was stirred until the pulp was evenly dispersed. To the reaction system, 360 ml of an aqueous sodium hypochlorite solution (available chlorine: 5%) was added, and then the mixture was adjusted to pH 10.3 with a 0.5N aqueous hydrochloric acid solution and oxidation reaction was initiated. While the pH of the system decreased during the reaction, a 0.5N aqueous sodium hydroxide solution was successively added to adjust the system to pH 10. After 2-hour reaction, the mixture was passed through a glass filter and pulp obtained was well washed with water to give oxidized pulp.

(Alkaline hydrolysis of anion-modified cellulose)

To 30 g (bone dry weight) of the oxidized pulp, 11.25 ml of 1 mol/L NaOH and 4 ml of a 30% hydrogen peroxide solution were added, and the mixture was adjusted with ultrapure water to 5% (w/v) and then heated in an autoclave at 80°C for 2 hours.

(Recovery of waste liquor obtained from alkaline hydrolysis reaction)

The resulting alkaline hydrolysate of the oxidized pulp was subjected to solid-liquid separation by centrifugation.

(Defibration of anion-modified cellulose)

The solid content obtained by the above-mentioned solid-liquid separation was washed and dewatered, then adjusted with sulfuric acid to pH 2, further dewatered by centrifugation, and neutralized with sodium hydroxide to prepare concentrated oxidized pulp having a concentration of 10% (w/v) and pH 7. The concentrated oxidized pulp was treated 10 times with an ultrahigh pressure homogenizer to give a transparent gelatinous dispersion (10% (w/v)).

(Addition of waste liquor obtained from alkaline hydrolysis reaction)

To this gelatinous dispersion, the solution obtained by solid-liquid separation of the alkaline hydrolysate was added to adjust the concentration to 6.7% (w/v), and the mixture was stirred to homogenize it.

The B-type viscosity (60 rpm, 20°C) of the 6.7% (w/v) cellulose nanofiber dispersion obtained was measured with TV-10 viscometer (Toki Sangyo Co., Ltd.).

[Example 16]

(Anionic modification)

100 g (bone dry weight) of unbeaten bleached softwood pulp (Nippon Paper Chemicals Co., Ltd.; brightness: 86%) was added to 10 L of an aqueous solution in which 1.56 g of TEMPO (Sigma Aldrich) and 15.1 g of sodium bromide

were dissolved, and the mixture was stirred until the pulp was evenly dispersed. To the reaction system, 360 ml of an aqueous sodium hypochlorite solution (available chlorine: 5%) was added, and then the mixture was adjusted to pH 10.3 with a 0.5N aqueous hydrochloric acid solution and oxidation reaction was initiated. While the pH of the system decreased during the reaction, a 0.5N aqueous sodium hydroxide solution was successively added to adjust the system to pH 10. After 2-hour reaction, the mixture was passed through a glass filter and pulp obtained was well washed with water to give oxidized pulp.

(Alkaline hydrolysis and recovery of waste liquor)

To 30 g (bone dry weight) of the oxidized pulp, 11.25 ml of 1 mol/L NaOH and 4 ml of a 30% hydrogen peroxide solution were added, and the mixture was adjusted with ultrapure water to 5% (w/v) and then heated in an autoclave at 80°C for 2 hours.

The resulting alkaline hydrolysate of the oxidized pulp was subjected to solid-liquid separation by centrifugation.

(Defibration and addition of waste liquor obtained from alkaline hydrolysis)

The solid content obtained by the above-mentioned solid-liquid separation was washed and dewatered, then adjusted with ultrapure water to 3% (w/v) and treated 10 times with an ultrahigh pressure homogenizer to give a transparent gelatinous dispersion (3% (w/v)).

To this gelatinous dispersion, the solution obtained by solid-liquid separation of the alkaline hydrolysate was added to adjust the concentration to 2% (w/v), and the mixture was stirred to homogenize it. The B-type viscosity (60 rpm, 20°C) of the 2% (w/v) cellulose nanofiber dispersion obtained was measured with TV-10 viscometer (Toki Sangyo Co., Ltd.).

[Example 17]

The oxidized pulp that was obtained in the same manner as in Example 15 was adjusted with ultrapure water to 4% (w/v) and then treated 10 times with an ultrahigh pressure homogenizer to give a transparent gelatinous dispersion (4% (w/v)).

To this gelatinous dispersion, the solution obtained by solid-liquid separation of the alkaline hydrolysate in Example 15 was added to adjust the concentration to 3% (w/v), and the mixture was stirred to homogenize it. The B-type viscosity (60 rpm, 20°C) of the 3% (w/v) cellulose nanofiber dispersion obtained was measured with TV-10 viscometer (Toki Sangyo Co., Ltd.).

[Comparative Example 3]

To the transparent gelatinous dispersion (10% (w/v)) obtained in the same manner as in Example 15, ultrapure water was added to adjust the concentration to 6.7% (w/v), and the mixture was stirred to homogenize it. The B-type viscosity (60 rpm, 20°C) of the 6.7% (w/v) cellulose nanofiber dispersion obtained was measured with TV-10 viscometer (Toki Sangyo Co., Ltd.).

[Comparative Example 4]

To the transparent gelatinous dispersion (3% (w/v)) obtained in the same manner as in Example 16, ultrapure water was added to adjust the concentration to 2% (w/v), and the mixture was stirred to homogenize it. The B-type viscosity (60 rpm, 20°C) of the 2% (w/v) cellulose nanofiber dispersion obtained was measured with TV-10 viscometer (Toki Sangyo Co., Ltd.).

[Comparative Example 5]

To the transparent gelatinous dispersion (4% (w/v)) obtained in the same manner as in Example 17, ultrapure water was added to adjust the concentration to 3% (w/v), and the mixture was stirred to homogenize it. The B-type viscosity (60 rpm, 20°C) of the 3% (w/v) cellulose nanofiber dispersion obtained was measured with TV-10 viscometer (Toki Sangyo Co., Ltd.).

[Table 2]

| | Raw material pulp | Alkaline hydrolysis | Diluent | Conc. (%) of CNF | B-type viscosity (mPa•s) |
|---|---|---|---|---|---|
| Ex. 15 | Hardwood DKP | done | Solution from alkaline hydrolysis | 6.7 | 3210 |
| Ex. 16 | Softwood KP | done | Solution from alkaline hydrolysis | 2 | 1090 |
| Ex. 17 | Hardwood DKP | - | Solution from alkaline hydrolysis | 3 | 3460 |
| Comp. Ex. 3 | Hardwood DKP | done | Water | 6.7 | 4675 |
| Comp. Ex. 4 | Softwood KP | done | Water | 2 | 1970 |
| Comp. Ex. 5 | Hardwood DKP | - | Water | 3 | 6430 |

[Example 18]

Bleached LDKP (brightness: 86%) was prepared in the same manner as in Example 15 and subjected to anionic modification (introduction of carboxyl groups) to prepare oxidized pulp. This oxidized pulp was subjected to alkaline hydrolysis.
The unwashed alkaline hydrolysate of the oxidized pulp was treated three times with an ultrahigh pressure homogenizer (treatment pressure: 140 MPa) to give a transparent gelatinous dispersion.
The B-type viscosity (60 rpm, 20°C) of the 5% (w/v) cellulose nanofiber dispersion obtained was measured with TV-10 viscometer (Toki Sangyo Co., Ltd.).

[Comparative Example 6]

The alkaline hydrolysate of oxidized pulp which was obtained in the same manner as in Example 18 was subjected to solid-liquid separation by centrifugation. The solid content obtained was washed and dewatered, then adjusted with ultrapure water to a concentration of 5% (w/v), and treated three times with an ultrahigh pressure homogenizer (treatment pressure: 140 MPa) to give a transparent gelatinous dispersion.
The B-type viscosity (60 rpm, 20°C) of the 5% (w/v) cellulose nanofiber dispersion obtained was measured with TV-10 viscometer (Toki Sangyo Co., Ltd.).

[Table 3]

| | Alkaline hydrolysis | Washing | No. of treatment with ultrahigh pressure homogenizer | Conc. (%) of CNF | B-type viscosity (mPa•s) |
|---|---|---|---|---|---|
| Ex. 18 | done | - | 3 | 5 | 689 |
| Comp. Ex. 6 | done | done | 3 | 5 | 6015 |

## Claims

**1.** A method for producing an anion-modified cellulose nanofiber dispersion, comprising the steps of:

(A) preparing anion-modified cellulose; and
(B) defibrating the anion-modified cellulose into nanofibers to prepare the anion-modified cellulose nanofiber dispersion,

the method further comprising the step of adding a compound containing a monovalent or divalent metal ion, wherein an amount of the added metal ion is 0.3 to 10% (w/w) based on the amount of anion-modified

cellulose nanofibers contained in the final anion-modified cellulose nanofiber dispersion;

**characterised in that** the monovalent or divalent metal ion is a metal ion contained in a liquid portion of the reaction mixture generated from alkaline hydrolysis of a second anion-modified cellulose and wherein either:

(i) the second anion-modified cellulose is the anion-modified cellulose of step A and wherein the method comprises subjecting the reaction mixture from the alkaline hydrolysis to solid-liquid separation to recover the liquid portion, and adding the liquid portion to the cellulose nanofiber dispersion obtained from step B; or

(ii) the second anion-modified cellulose is not the anion-modified cellulose of step A and wherein the method comprises subjecting the reaction mixture from the alkaline hydrolysis to solid-liquid separation to recover the liquid portion, and adding the liquid portion to the cellulose nanofiber dispersion obtained from step B without the alkaline hydrolysis treatment; or

(iii) the second anion-modified cellulose is the anion-modified cellulose of step A and wherein step B comprises defibrating the anion-modified cellulose contained in the reaction mixture from the alkaline hydrolysis into nanofibers, wherein the anion-modified cellulose obtained after completion of the alkaline hydrolysis is defibrated without being washed.

**2.** The method according to claim 1, wherein the step of preparing anion-modified cellulose comprises introducing carboxymethyl groups into cellulose and a degree of substitution of carboxymethyl group per glucose unit of the anion-modified cellulose is 0.01 to 0.50.

**3.** The method according to claim 1, wherein the step of preparing anion-modified cellulose comprises introducing carboxyl groups into cellulose and an amount of the introduced carboxyl groups is 1.0 to 2.0 mmol/g based on a bone dry mass of the anion-modified cellulose.

**4.** The method according to any one of claims 1 to 3, wherein:

step (A) comprises oxidizing a starting cellulosic material with an oxidizing agent in the presence of an N-oxyl compound and a compound selected from the group consisting of bromides, iodides and mixtures thereof to introduce carboxyl groups into cellulose to prepare anion-modified cellulose; and

wherein the step of subjecting the anion-modified cellulose to alkaline hydrolysis uses an oxidizing agent or a reducing agent under alkaline conditions.

## Patentansprüche

**1.** Verfahren zur Produktion einer anionenmodifizierten Cellulosenanofaserdispersion, umfassend die Schritte:

(A) Herstellen von anionenmodifizierter Cellulose; und

(B) Zerfasern der anionenmodifizierten Cellulose zu Nanofasern, um die anionenmodifizierte Cellulosenanofaserdispersion herzustellen,

wobei das Verfahren des Weiteren den Schritt des Zufügens einer Verbindung umfasst, die ein einwertiges oder zweiwertiges Metallion enthält, wobei eine Menge des zugefügten Metallions 0,3 bis 10 % (Gew./Gew.) beträgt, bezogen auf die Menge der anionenmodifizierten Cellulosenanofasern, die in der endgültigen anionenmodifizierten Cellulosenanofaserdispersion enthalten sind;

**dadurch gekennzeichnet, dass** das einwertige oder zweiwertige Metallion ein Metallion ist, das in einem flüssigen Anteil der Reaktionsmischung enthalten ist, die durch alkalische Hydrolyse einer zweiten anionenmodifizierten Cellulose erzeugt worden ist, und wobei entweder:

(i) die zweite anionenmodifizierte Cellulose die anionenmodifizierte Cellulose aus Schritt A ist, und wobei das Verfahren umfasst, dass die Reaktionsmischung aus der alkalischen Hydrolyse Fest-Flüssig-Trennung ausgesetzt wird, um den flüssigen Anteil zu gewinnen, und der flüssige Anteil zu der Cellulosenanofaserdispersion gegeben wird, die aus Schritt B erhalten wird; oder

(ii) die zweite anionenmodifizierte Cellulose nicht die anionenmodifizierte Cellulose aus Schritt A ist, und wobei das Verfahren umfasst, dass die Reaktionsmischung aus der alkalischen Hydrolyse Fest-Flüssig-Trennung ausgesetzt wird, um den flüssigen Anteil zu gewinnen, und der flüssige Anteil zu der

Cellulosenanofaserdispersion gegeben wird, die aus Schritt B ohne die alkalische Hydrolysebehandlung erhalten wird; oder
(iii) die zweite anionenmodifizierte Cellulose die anionenmodifizierte Cellulose aus Schritt A ist, und wobei Schritt B Zerfasern der anionenmodifizierten Cellulose, die in der Reaktionsmischung aus der alkalischen Hydrolyse enthalten ist, zu Nanofasern umfasst, wobei die anionenmodifizierte Cellulose, die nach Abschluss der alkalischen Hydrolyse erhalten wird, zerfasert wird, ohne gewaschen zu werden.

**2.** Verfahren nach Anspruch 1, wobei der Schritt des Herstellens von anionenmodifizierter Cellulose Einführen von Carboxymethylgruppen in Cellulose umfasst, und wobei ein Substitutionsgrad der Carboxymethylgruppen pro Glucoseeinheit der anionenmodifizierten Cellulose 0,01 bis 0,50 beträgt.

**3.** Verfahren nach Anspruch 1, wobei der Schritt des Herstellens von anionenmodifizierter Cellulose Einführen von Carboxylgruppen in Cellulose umfasst und eine Menge der eingeführten Carboxylgruppen 1,0 bis 2,0 mmol/g beträgt, bezogen auf eine absolut trockene Masse der anionenmodifizierten Cellulose.

**4.** Verfahren nach einem der Ansprüche 1 bis 3, wobei:

Schritt (A) Oxidieren eines Ausgangscellulosematerials mit einem Oxidationsmittel in Gegenwart einer N-Oxylverbindung und einer Verbindung ausgewählt aus der Gruppe bestehend aus Bromiden, Iodiden und Mischungen davon umfasst, um Carboxylgruppen in Cellulose einzuführen, um anionenmodifizierte Cellulose herzustellen; und
wobei der Schritt des Aussetzens der anionenmodifizierten Cellulose alkalischer Hydrolyse ein Oxidationsmittel oder ein Reduktionsmittel unter alkalischen Bedingungen verwendet.

## Revendications

**1.** Procédé pour la production d'une dispersion de nanofibres de cellulose modifiée par un anion, comprenant les étapes de :

(A) préparation d'une cellulose modifiée par un anion ; et
(B) défibrage de la cellulose modifiée par un anion en nanofibres pour préparer la dispersion de nanofibres de cellulose modifiée par un anion,

le procédé comprenant en outre l'étape d'ajout d'un composé contenant un ion métallique monovalent ou divalent, une quantité de l'ion métallique ajouté étant de 0,3 à 10 % (p/p) sur la base de la quantité de nanofibres de cellulose modifiée par un anion contenues dans la dispersion de nanofibres de cellulose modifiée par un anion finale ;
**caractérisé en ce que** l'ion métallique monovalent ou divalent est un ion métallique contenu dans une partie liquide du mélange réactionnel généré par l'hydrolyse alcaline d'une deuxième cellulose modifiée par un anion et dans lequel soit :

(i) la deuxième cellulose modifiée par un anion est la cellulose modifiée par un anion de l'étape A et le procédé comprenant la soumission du mélange réactionnel provenant de l'hydrolyse alcaline à une séparation solide-liquide pour récupérer la partie liquide et l'ajout de la partie liquide à la dispersion de nanofibres de cellulose obtenue à partir de l'étape B ; soit
(ii) la deuxième cellulose modifiée par un anion n'est pas la cellulose modifiée par un anion de l'étape A et le procédé comprenant la soumission du mélange réactionnel provenant de l'hydrolyse alcaline à une séparation solide-liquide pour récupérer la partie liquide, et l'ajout de la partie liquide à la dispersion de nanofibres de cellulose obtenue à partir de l'étape B sans le traitement par hydrolyse alcaline ; soit
(iii) la deuxième cellulose modifiée par un anion est la cellulose modifiée par un anion de l'étape A et l'étape B comprenant le défibrage de la cellulose modifiée par un anion contenue dans le mélange réactionnel provenant de l'hydrolyse alcaline en nanofibres, la cellulose modifiée par un anion obtenue après l'achèvement de l'hydrolyse alcaline étant défibrée sans être lavée.

**2.** Procédé selon la revendication 1, l'étape de préparation d'une cellulose modifiée par un anion comprenant l'introduction de groupes carboxyméthyle dans la cellulose et un degré de substitution de groupe carboxyméthyle par motif de glucose de la cellulose modifiée par un anion étant de 0,01 à 0,50.

3. Procédé selon la revendication 1, l'étape de préparation d'une cellulose modifiée par un anion comprenant l'introduction de groupes carboxyle dans la cellulose et une quantité des groupes carboxyle introduits étant de 1,0 à 2,0 mmole/g sur la base d'une masse tout à fait sèche de la cellulose modifiée par un anion.

4. Procédé selon l'une quelconque des revendications 1 à 3,

l'étape (A) comprenant l'oxydation d'une matière cellulosique de départ avec un agent oxydant en la présence d'un composé de type N-oxyle et d'un composé choisi dans le groupe constitué par des bromures, des iodures et des mélanges correspondants pour introduire des groupes carboxyle dans la cellulose pour préparer une cellulose modifiée par un anion, et
l'étape de soumission de la cellulose modifiée par un anion à une hydrolyse alcaline utilisant un agent oxydant ou un agent réducteur dans des conditions alcalines.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008001728 A
- JP 2010235679 A
- JP H10251301 A
- JP 2011195738 A


### Non-patent literature cited in the description


- **SAITO, T. et al.** *Cellulose Commun.,* 2007, vol. 14 (2), 62